Europäisches Patentamt

European Patent Office

Office européen des brevets

(11) Publication number: **0 326 301**
A2

## (12) EUROPEAN PATENT APPLICATION

(21) Application number: 89300588.4

(22) Date of filing: 23.01.89

(51) Int. Cl.⁴: **B60H 1/00**

(30) Priority: 23.01.88 JP 6656/88

(43) Date of publication of application:
02.08.89 Bulletin 89/31

(84) Designated Contracting States:
DE FR GB IT SE

(71) Applicant: SANDEN CORPORATION
20 Kotobuki-cho
Isesaki-shi Gunma, 372(JP)

(72) Inventor: Fujita, Toshihiko
2718-2, Kami-Ueki-Hon-machi
Isesaki-shi Gunma 372(JP)
Inventor: Nakazawa, Takeharu
1013-2 Kawai Tamamura-machi Sawa-gun
Gunma 370-11(JP)

(74) Representative: Jackson, Peter Arthur et al
GILL JENNINGS & EVERY 53-64 Chancery
Lane
London WC2A 1HN(GB)

(54) Air duct assembly for automotive air conditioning system.

(57) A automotive air conditioning system includes a duct (22) through which conditioned air flows. An air blower (17) is located within the duct. An outside air intake air intake (14) and first and second passenger compartment air intakes (15,20) are formed in the duct. A first damper (16) alternatively opens and closes the outside air intake and the first passenger compartment air intake. A second damper (24), which is a dead weight type, opens and closes the second passenger compartment air intake. The second damper compulsively closes the second passenger compartment air intake upon exciting of an electromagnet (23) adjacent to an edge of the second passenger compartment air intake in response to demand.

Fig. 2

## AIR DUCT ASSEMBLY FOR AUTOMOTIVE AIR CONDITIONING SYSTEM

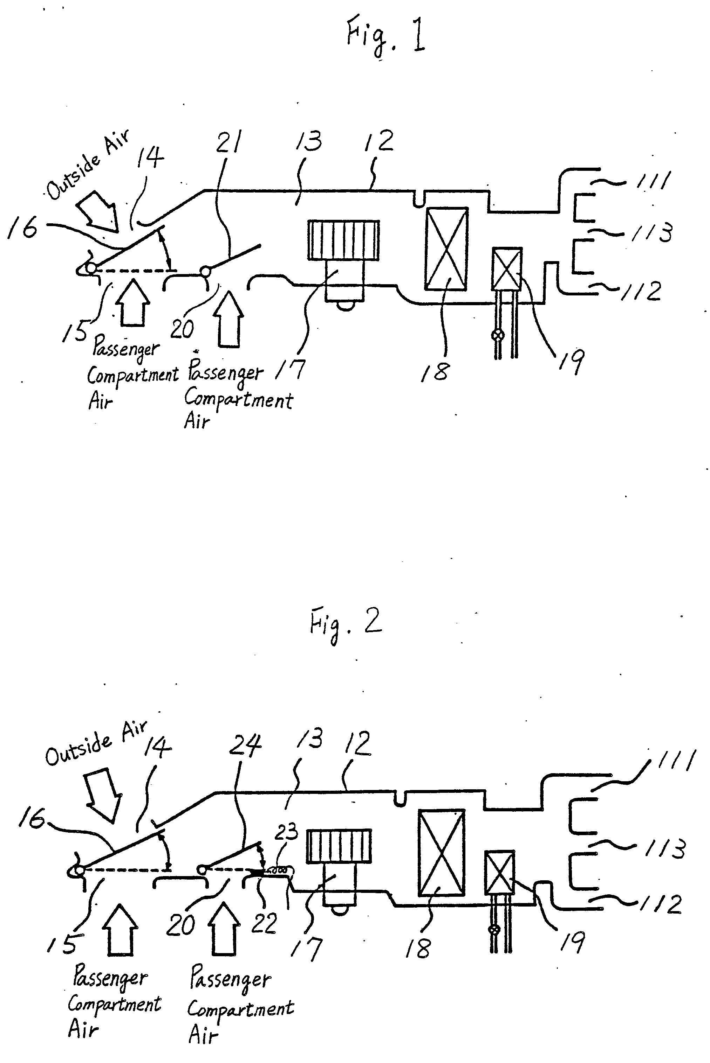

As shown in Figure 1 of the accompanying drawings, a prior automotive air conditioning system includes a duct 12 defining an air passage 13. An upstream end (left in Figure 1) of the duct 12 is shaped by gradually tapering walls. An outside air intake 14 and a first passenger compartment air intake 15 are formed at this end of the duct 12. A first damper 16 is disposed within the end of the duct 12, and selectively opens and closes the outside air intake 14 and first passenger compartment air intake 15 in response to air conditioning demand. An air blower 17 for forcing conditioned air from the upstream end to the downstream end (right in Figure 1) of the duct 12 is located within the duct 12. An evaporator 18 and a heater 19 are disposed within a portion of the duct 12 downstream of the air blower 17. First, second and third outlet openings 111, 112 and 113 are formed at the downstream end of the duct 12. The first opening 111 leads blown conditioned air to defrost a windshield of an automobile (not shown. The second opening 112 leads blown conditioned air to a foot space of the passenger compartment. The third opening 113 leads blown conditioned air above waist height into the passenger compartment. A second passenger compartment air intake 20 is formed in the wall of the duct 12 between the first passenger compartment air intake 15 and the air blower 17. A second damper 21 is disposed within the duct 12 adjacent to the second passenger compartment air intake 20. The second damper 21 is of a dead weight type, that is, the second damper 21 can move to close the second passenger compartment air intake 20 under its own weight. However, when air flows in the duct 12, the damper 21 is sucked up into the duct 12 against its own weight. Therefore, when the speed of the air flow of duct 21 exceeds some threshold value, the second passenger compartment air intake 20 is opened as one end of the second damper 21 moves into the duct 12 as shown in Figure 1. The second passenger compartment air intake 20 takes in passenger compartment air in addition to any taken in through the first passenger compartment air intake 15.

In operation, when the air blower 17 is operated, outside air or passenger compartment air is taken in in response to the position of the first damper 16. Then the air flows through the evaporator 18 and heater 19. Finally, the air is blown through the first opening 111, and/or the second opening 112 and/or the third opening 113 in response to demand. Furthermore, when the speed of the air flow through the duct 21 exceeds some value, passenger compartment air is additionally taken in through the second passenger compartment air intake 20 and joins the above mentioned air flow.

Accordingly, passenger compartment air may be re-circulated in any position of first damper 16 when the air blower 17 is operated.

When the circulation of passenger compartment air is not needed, such as when supplying the passenger compartment with, possibly heated, comfortable ventilation, both the first and second passenger compartment air intakes 15, 20 should be closed to avoid taking passenger compartment air into the duct 12, that is, only outside air should be taken into the duct 21, by opening the outside air intake 14. However, in the above-mentioned prior art, the second passenger compartment air intake 20 cannot be positively closed owing to the second damper 21 being of the dead weight type. Accordingly, treating the passenger compartment with comfortable ventilation is ineffective.

It is an object of this invention to provide an air duct assembly for an automotive air conditioning system which can properly re-circulate passenger compartment air in response to demand.

In accordance with the invention there is provided an air duct assembly for an automotive air conditioning system, the assembly including a duct through which conditioned air flows, an air blower located within the duct, an outside air intake leading into the duct, a first passenger compartment air intake and at least one second passenger compartment air intake both leading into the duct, a first damper for opening the outside air intake and closing the first passenger compartment air intake and vice versa, and at least one second damper of dead weight type for opening and closing the second passenger compartment air intake; characterised by at least one selectively energisable electromagnet disposed adjacent to the second passenger compartment air intake for holding the second damper in its closed position.

In the accompanying drawings:-

Figure 1 is a diagrammatic vertical sectional view of a prior duct assembly of an automotive air conditioning system;

Figure 2 is a diagrammatic vertical sectional view of a duct assembly of an automotive air conditioning system and in accordance with the invention;

Figure 3 is an enlarged schematic view of a second damper shown in Figure 2, dashed and solid lines showing the damper in its opened and closed positions, respectively; and,

Figures 4, 5 and 6 are enlarged schematic views of both first and second dampers shown in Figure 2.

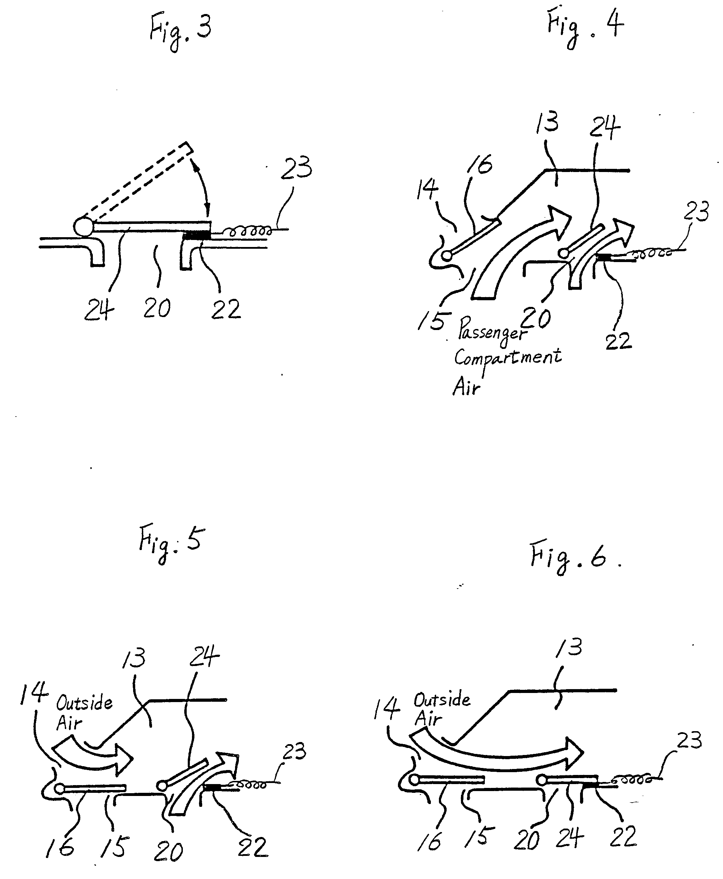

Figure 2 illustrates one embodiment of the present invention in which the same numerals are used to denote the corresponding elements shown in Figure 1. In this embodiment, an electromagnet 22 is fixed at an inner edge of the second passenger compartment air intake 20. A lead 23, providing an air conditioning demand signal, is connected to the electromagnet 22. A portion of a second damper 24 facing the electromagnet 22 is made of a ferromagnetic material, such as iron so as to be attracted by the electromagnet 22 when the electromagnet is energised.

With reference to Figure 3, when the electromagnet 22 is energised by receiving an appropriate signal e.g. current, via the wire 23, the second damper 24 is drawn to the electromagnet 22 to close the second passenger compartment intake 20 as shown in solid line. On the other hand, when the electromagnet 22 is demagnetized by receiving another appropriate signal, e.g. no current, the wire 23, the second damper 24 controls the opening and closing of the second passenger compartment air intake 20 in response to the speed of air flow in the duct 21 when the air blower 17 is operated.

With reference to Figure 4, the first damper 16 is shown closing the outside air intake 14, that is the first passenger compartment air intake 15 is open. This is suitable for air conditioning in hot ambience, such as during day time in summer. Simultaneously, the second damper 24 is not attracted by the electromagnet 22 which is demagnetized. In this situation, when the air blower 17 is operated, passenger compartment air is taken into the duct 12 through the first passenger compartment air intake 15 and flows through the duct 12. Furthermore, when the speed of air flow in the duct 21 exceeds some value, the second passenger compartment air intake 20 is opened so that additional passenger compartment air is taken into the duct 12 and flows through the duct 12. Accordingly, effective air cooling is obtained owing to an increase the amount of re-circulated passenger compartment air.

With reference to Figure 5, the first damper 16 is shown closing the first passenger compartment air intake 15, that is the outside air intake 15 is opened. This is suitable for air conditioning for a cold ambience such as in the winter. Simultaneously, the second damper 24 is not attracted by the electromagnet 22 which is demagnetized. In this situation, when the air blower 17 is operated outside air is taken into the duct through the outside air intake 14 and flows through the duct 12. Furthermore, when the speed of air flow in the duct 21 exceeds some value, the second passenger compartment air intake 20 is opened so that passenger compartment air is taken into the duct 12 and flows through the duct 12. Accordingly, the ability to heat the passenger compartment is increased.

With reference to Figure 6, the first damper 16 is shown closing the first passenger compartment air intake 15, that is the outside air intake 15 is opened. This is suitable for air conditioning in a cold ambience such as in the winter. Simultaneously, the second damper 24 closes the second passenger compartment air intake 20 owing to the electromagnet 22 being excited. In this situation, when the air blower 17 is operated, outside air is taken into the duct 12 through the outside air intake 14 and flows through the duct 12. No passenger compartment air is taken into the duct 12 owing to both the first and second passenger compartment air intakes 15 and 20 being closed. Accordingly, heating the passenger compartment with comfortable ventilation is obtained effectively.

## Claims

1. An air duct assembly for an automotive air conditioning system, the assembly including a duct (12) through which conditioned air flows, an air blower (17) located within the duct, an outside air intake (14) leading into the duct, a first passenger compartment air intake (15) and at least one second passenger compartment air intake (16) both leading into the duct, a first damper (16) for opening the outside air intake (14) and closing the first passenger compartment air intake (20) and vice versa, and, at least one second damper (21) of dead weight type for opening and closing the second passenger compartment air intake (20); characterised by at least one selectively energisable electromagnet (22) disposed adjacent to the second passenger compartment air intake (20) for holding the second damper (24) in its closed position.

2. An assembly according to claim 1 wherein the outside air and first passenger compartment air intakes (14,15) are located upstream of the air blower (17).

3. An assembly according to claim 1 or claim 2, wherein the second passenger compartment air intake (20) is located upstream of the air blower (17).

4. An assembly according to any one of the preceding claims, wherein an evaporator (18) and a heater (19) are disposed within the duct (12) downstream of the air blower (17).

5. An assembly according to any one of the preceding claims, wherein an evaporator (18) and a heater (19) are disposed within the duct (12) downstream of the second passenger compartment air intake (20).

6. An assembly according to any one of the preceding claims, wherein the second damper (24) is moved to its open position by the suction of air flowing through the duct (12).

7. An automotive air conditioning system incorporating an air duct assembly according to any one of the preceding claims.

Fig. 1

Outside Air
14
21
13
12
16
111
113
112
15
Passenger
Compartment
Air
20
Passenger
Compartment
Air
17
18
19

Fig. 2

Outside Air
14
24
13
12
16
111
23
113
112
15
20
22
17
18
19
Passenger
Compartment
Air
Passenger
Compartment
Air

Fig. 3

23

24    20    22

Fig. 4

13    24

14    16

23

15  Passenger
    Compartment
    Air

20    22

Fig. 5

13    24

14  Outside
    Air

23

16  15    20    22

Fig. 6.

13

14  Outside
    Air

23

16  15  20  24  22